# EUROPEAN PATENT APPLICATION

(11) **EP 4 694 232 A1**
(43) Date of publication of application: **11.02.2026**
(21) Application number: 24797408.2
(22) Date of filing: 24.04.2024
(51) Int. Cl.: H04W 4/80, G01S 13/02, H04W 8/00, H04W 88/06

(54) **METHOD AND DEVICE FOR ULTRA WIDE BAND COMMUNICATION AND NARROWBAND COMMUNICATION**

(30) Priority: 24.04.2023 KR 20230053623
(71) Applicant: Samsung Electronics Co., Ltd., Suwon-si, Gyeonggi-do 16677 (KR)
(72) Inventor: LEE, Mingyu, Suwon-si, Gyeonggi-do 16677 (KR); HA, Taeyoung, Suwon-si, Gyeonggi-do 16677 (KR)
(74) Representative: Nederlandsch Octrooibureau
(86) International application number: PCT/KR2024/005546
(87) International publication number: WO 2024/225753

(57) **Abstract**

The present disclosure provides a method for operating an ultra wide band (UWB) channel and a narrowband (NB) channel together. According to various embodiments of the disclosure, a method of a first UWB device may comprise the operations of: broadcasting, through an initialization channel, a first message (Adv Poll) that provides information used for the discovery of the first UWB device; receiving, through the initialization channel, from a second UWB device, a second message (Adv RESP) that responds to the first message (Adv Poll); and transmitting, through the initialization channel, to the second UWB device, a third message (Adv DEFERRED or Adv CONF) corresponding to the second message (Adv RESP). The initialization channel can include at least one from among NB channels.

## Description

### [Technical Field]

The disclosure relates to UWB communication, and more particularly, to a method and device for providing a UWB service through a UWB channel and an NB channel.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create a new value for human. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

### [Detailed Description of the Disclosure]

### [Technical Problem]

The disclosure provides a method and device for providing a UWB service through a UWB channel and an NB channel.

### [Technical Solution]

A method of a first ultra-wide band (UWB) device according to an embodiment of the disclosure includes broadcasting a first message (Adv Poll) providing information used for discovery of the first UWB device through an initialization channel, receiving a second message (Adv RESP) responding to the first message (Adv Poll) from a second UWB device through the initialization channel, and transmitting a third message (Adv DEFERRED or Adv CONF) corresponding to the second message (Adv RESP) to the second UWB device through the initialization channel. The initialization channel may include at least one of narrow band (NB) channels.

A method of a second ultra-wide band (UWB) device according to an embodiment of the disclosure includes receiving a first message (Adv Poll) providing information used for discovery of a first UWB device from the first UWB device through an initialization channel, transmitting a second message (Adv RESP) responding to the first message (Adv Poll) to the first UWB device through the initialization channel, and receiving a third message (Adv DEFERRED or Adv CONF) corresponding to the second message (Adv RESP) from the first UWB device through the initialization channel. The initialization channel may include at least one of narrow band (NB) channels.

A first ultra-wide band (UWB) device according to an embodiment of the disclosure includes a transceiver, and a controller. The controller may be configured to control to broadcast a first message (Adv Poll) providing information used for discovery of the first UWB device through an initialization channel, receive a second message (Adv RESP) responding to the first message (Adv Poll) from a second UWB device through the initialization channel, and control to transmit a third message (Adv DEFERRED or Adv CONF) corresponding to the second message (Adv RESP) to the second UWB device through the initialization channel. The initialization channel may include at least one of narrow band (NB) channels.

A second ultra-wide band (UWB) device according to an embodiment of the disclosure includes a transceiver, and a controller. The controller may be configured to receive a first message (Adv Poll) providing information used for discovery of a first UWB device from the first UWB device through an initialization channel, control to transmit a second message (Adv RESP) responding to the first message (Adv Poll) to the first UWB device through the initialization channel, and receive a third message (Adv DEFERRED or Adv CONF) corresponding to the second message (Adv RESP) from the first UWB device through the initialization channel. The initialization channel may include at least one of narrow band (NB) channels.

### [Advantageous Effects]

The disclosure provides a method for efficiently performing connection setup of an electronic device by operating a UWB channel and an NB channel.

### [Brief Description of Drawings]

FIG. 1A illustrates an example architecture of a UWB device according to an embodiment of the disclosure.
FIG. 1B illustrates a communication system including a UWB device according to an embodiment of the disclosure.
FIG. 2 illustrates a method for performing an NB procedure and a UWB procedure by a UWB device according to an embodiment of the disclosure.
FIG. 3 illustrates an example of a structure of a ranging block and round used for UWB ranging according to an embodiment of the disclosure.
FIG. 4 illustrates a UWB ranging operation according to an embodiment of the disclosure.
FIG. 5 illustrates a UWB ranging operation according to another embodiment of the disclosure.
FIG. 6 illustrates an operation by a UWB device in a ranging area network according to an embodiment of the disclosure.
FIG. 7A illustrates an advertising operation according to an embodiment of the disclosure.
FIG. 7B illustrates an advertising operation and a connection setup operation according to an embodiment of the disclosure.
FIG. 8 illustrates a structure of a channel used in a ranging area network according to an embodiment of the disclosure.
FIG. 9 is a view illustrating operations of an Initiator and a Responder according to an embodiment of the disclosure.
FIG. 10 illustrates a connection setup operation of an Initiator according to an embodiment of the disclosure.
FIG. 11 illustrates a connection setup operation of a Responder according to an embodiment of the disclosure.
FIG. 12 illustrates an example of fields included in an Advertisement identification message according to an embodiment of the disclosure.
FIG. 13 illustrates an example of fields included in an Advertisement Deferred message according to an embodiment of the disclosure.
FIG. 14 illustrates an example of fields included in an Advertisement Deferred message or an Advertisement Confirmation message according to an embodiment of the disclosure.
FIG. 15 illustrates another example of fields included in an Advertisement Deferred message or an Advertisement Confirmation message according to an embodiment of the disclosure.
FIG. 16 illustrates an example of fields included in an Advertisement Confirmation message according to an embodiment of the disclosure.
FIG. 17A illustrates another example of fields included in an Advertisement Confirmation message according to an embodiment of the disclosure.
FIG. 17B illustrates yet another example of fields included in an Advertisement Confirmation message according to an embodiment of the disclosure.
FIG. 18A illustrates yet another example of fields included in an Advertisement Confirmation message according to an embodiment of the disclosure.
FIG. 18B illustrates an example of an MMRS index according to an embodiment of the disclosure.
FIG. 19 illustrates a structure of a first UWB device according to an embodiment of the disclosure.
FIG. 20 illustrates a structure of a second UWB device according to an embodiment of the disclosure.

### [Mode for Carrying out the Disclosure]

Hereinafter, embodiments of the disclosure are described in detail with reference to the accompanying drawings.

In describing embodiments, the description of technologies that are known in the art and are not directly related to the disclosure is omitted. This is for further clarifying the gist of the disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the disclosure, and methods for achieving the same may be understood through the embodiments to be described below taken in conjunction with the accompanying drawings. However, the disclosure is not limited to the embodiments disclosed herein, and various changes may be made thereto. The embodiments disclosed herein are provided only to inform one of ordinary skilled in the art of the category of the disclosure. The disclosure is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the disclosure and may be replaced with other terms according to the intention or practice of the user or operator. Therefore, the terms should be defined based on the overall disclosure.

Hereinafter, embodiments of the disclosure are described in detail with reference to the accompanying drawings. Further, although a communication system using UWB is described in connection with embodiments of the disclosure, as an example, embodiments of the disclosure may also apply to other communication systems with similar technical background or features. For example, a communication system using Bluetooth or ZigBee may be included therein. Further, embodiments of the disclosure may be modified in such a range as not to significantly depart from the scope of the disclosure under the determination by one of ordinary skill in the art and such modifications may be applicable to other communication systems.

When determined to make the subject matter of the disclosure unclear, the detailed description of the known art or functions may be skipped. The terms as used herein are defined considering the functions in the disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Ranging device" may be a device capable of performing UWB ranging. In the disclosure, the ranging device may be a ranging device (RDEV) or enhanced ranging device (ERDEV) defined in, e.g., IEEE 802.15.4/4z. In the disclosure, the ranging device may be referred to as a UWB device.

"Advertiser" may be a device (e.g., ranging device) that transmits a message for discovery. For example, the Advertiser may be a device that transmits (or broadcasts) an advertisement message through a mirroring channel or transmits (or broadcasts) a discovery beacon (message) through a discovery channel.

"Scanner" may be a device (e.g., ranging device) that receives a message for discovery. For example, the Scanner may be a device that scans the mirroring channel to receive an advertisement message or scans the discovery channel to receives a discovery beacon (message). In this disclosure, the Scanner may be referred to as an observer.

"Controller" may be a device (e.g., ranging device) that defines and controls ranging control messages (RCM) (or control messages).

"Controlee" may be a device (e.g., ranging device) using a ranging parameter in the RCM (or control message) received from the Controller.

"Initiator" may be a device (e.g., ranging device) that initiates a ranging exchange.

"Responder" may be a device (e.g., ranging device) that responds to the Initiator in a ranging exchange.

"In-band" may be data communication that uses UWB as an underlying wireless technology.

"Out-of-band (OOB)" may be data communication that does not use UWB as an underlying wireless technology.

"UWB Session" may be a period from when the Controller and the Controlee start communication through UWB until the communication stops. In the UWB session, a ranging frame RFRAME may be transferred, a data frame may be transferred, or both a ranging frame and a data frame may be transferred.

"UWB session ID" may be an ID (e.g., a 32-bit integer) that identifies the UWB session, shared between the Controller and the Controlee.

"UWB session key" may be a key used to protect the UWB Session. The UWB session key may be used to generate a scrambled timestamp sequence (STS). In this disclosure, the UWB session key may be a UWB ranging session key (URSK), and may be abbreviated as a session key.

"UWB subsystem (UWBS)" may be a hardware component implementing the UWB PHY and MAC specifications included in the UWB device. In this disclosure, the UWB PHY and MAC specifications may be, e.g., the PHY and MAC specifications defined in, e.g., IEEE 802.15.4/4z. In this disclosure, the UWBS may be referred to as a UWB component.

"UWB-enabled application" may be an application for a service (UWB service). In this disclosure, "UWB-enabled Application" may be abbreviated as an application or a UWB application.

"Service" may be an implementation of a use case that provides a service to an end-user. In this disclosure, the service may be referred to as a UWB service.

"Service data" may be data defined by a service provider that needs to be transferred between two ranging devices to implement a service.

"Service provider" may be an entity that defines and provides hardware and software required to provide a specific service to an end-user.

"STS" may be a ciphered sequence for increasing the integrity and accuracy of ranging measurement timestamps.

Unlike "static STS," "dynamic STS mode" may be an operation mode in which the STS is not repeated during a ranging session. In this mode, the STS may be managed by the ranging device, and the ranging session key for generating STS may be managed by a secure component.

"Static STS mode" is an operation mode in which STS is repeated during a session, and does not need to be managed by the Secure Component.

"Secure channel" may be a data channel that prevents overhearing and tampering.

"Secure component" may be an entity (e.g., secure element (SE) or trusted execution environment (TEE)) having a defined security level that interfaces with UWBS for the purpose of providing RDS to UWBS, e.g., when dynamic STS is used.

"Secure ranging" may be ranging based on STS generated through a strong encryption operation.

"UWB channel" may be one of candidate UWB channels allocated for UWB communication. Candidate UWB channels allocated for UWB communication may be channels allocated for UWB communication. The UWB channel may be used for UWB communication (e.g., UWB ranging and/or transaction). For example, the UWB channel may be used for transmission/reception of a ranging frame RFRAME and/or transmission/reception of a data frame. As an embodiment, one or more UWB channels may be operated together.

"Narrow band (NB) channel" may be a channel having a narrower bandwidth than the UWB channel. As an embodiment, the NB channel may be a subchannel of one of the candidate UWB channels allocated for UWB communication or a channel using a specific bandwidth of another available band (e.g., a portion of an industrial, scientific and medical (ISM) band). Candidate UWB channels allocated for UWB communication may be channels allocated for UWB communication. The NB channel may be used for advertising, device discovery, and/or connection setup for additional parameter negotiation/authentication. For example, the NB channel may be used for transmission and reception of a discovery beacon (message), an advertisement message, an additional advertising message, a connection request message, and/or a connection confirmation message. As an embodiment, one or more NB channels may be operated together. As an embodiment, the NB channel may be used for in-band communication, like the UWB channel.

"Mirroring channel" is one of the NB channels and may be a channel used to provide information about device-to-device discovery and UWB channel occupancy. The mirroring channel may be coupled (or synchronized) with the UWB channel. For discovery, an advertisement message may be transmitted through a mirroring channel. As an embodiment, the advertisement message may be transmitted through the mirroring channel when the UWB channel (communication) is activated (UWB activation case). In this disclosure, the mirroring channel may be referred to as an advertisement channel or an NB advertisement channel or an NB mirroring channel. The advertisement message may be referred to as a first advertisement message or an NB advertisement message. As an embodiment, one or more mirroring channels may be operated together.

"discovery channel" is one of the NB channels and may be a channel used for device-to-device discovery and connection setup. The discovery channel may not be coupled (or synchronized) with the UWB channel. For discovery, a discovery beacon (message) may be transmitted through a discovery channel. As an embodiment, the discovery beacon (message) may be transmitted through the discovery channel regardless of whether the UWB channel (communication) is activated. The discovery beacon (message) may be transmitted through the discovery channel not only in the UWB activation case but also in the UWB de-activation case. In this disclosure, the discovery channel may be referred to as an NB discovery channel. The discovery beacon may be referred to as a discovery message, an NB discovery beacon, or an NB discovery message. As an embodiment, one or more discovery channels may be operated together.

When determined to make the subject matter of the disclosure unnecessarily unclear, the detailed description of related known functions or features may be skipped in describing the disclosure.

Hereinafter, various embodiments of the disclosure are described with reference to the accompanying drawings.

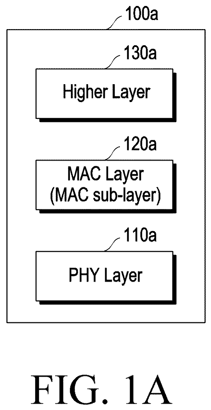

FIG. 1A illustrates an example architecture of a UWB device according to an embodiment of the disclosure.

Referring to FIG. 1A, a UWB device 100a may include at least one PHY layer 110a, a MAC layer (MAC sublayer) 120a and/or a higher layer 130a.

### (1) PHY layer

At least one PHY layer 110a may include a transceiver with a low-level control mechanism. In this disclosure, the transceiver may be referred to as an RF transceiver or a radio transceiver.

In an embodiment, the at least one PHY layer 110a may include at least one first transceiver supporting a UWB channel and at least one second transceiver supporting an NB channel having a narrower bandwidth than the UWB channel. In this disclosure, the first transceiver may be referred to as a UWB transceiver. The second transceiver may be referred to as an NB transceiver.

In another embodiment, at least one PHY layer 110a may include a transceiver (dual-channel transceiver) that supports both the UWB channel and the NB channel.

In an embodiment, the PHY layer 110a may support at least one of the following functions.
- Transceiver activation and deactivation function (transceiver on/off function)
- Energy detection function
- Channel selection function
- Clear channel assessment (CCA) function
- Synchronization function
- Low-level signaling function
- UWB ranging, positioning and localization functions
- Spectrum resource management function
- Function to transmit/receive packets through physical medium

### (2) MAC layer

The MAC layer 120a provides an interface between the upper layer 130a and the PHY layer 120a.

In an embodiment, the MAC layer 120a may provide two services as follows.
- MAC data service: A service that enables transmission and reception of MAC protocol data unit (PDU) through the PHY
- MAC management service: Service interfacing to MAC sublayer management entity (MLME) service access point (SAP) (MLME-SAP)

In an embodiment, the MAC layer 120a may support at least one of the following functions.

### Device discovery and connection setup function

Channel access function (function of access to physical channel (e.g., NB channel/UWB channel))
Synchronization function (e.g., synchronization between NB channel (mirroring channel) and UWB channel)
Interference mitigation function based on energy detection
Functions related to narrowband signaling
Guaranteed timeslot (GTS) management function
Frame delivery function
UWB ranging function
PHY parameter change notification function
Security function

### (3) Upper layer

The upper layer 130a may include a network layer providing functions, such as network configuration and message routing, and/or an application layer providing an intended function of the device.

In an embodiment, the application layer may be a UWB-enabled application layer for providing a UWB service.

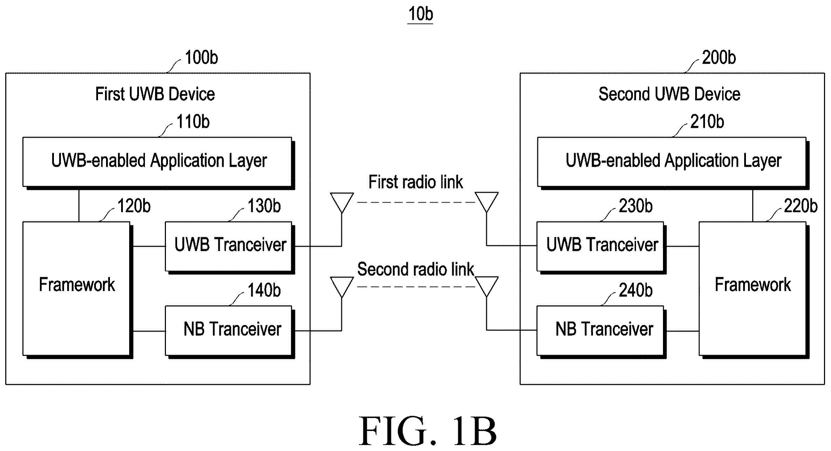

FIG. 1B illustrates a communication system including a UWB device according to an embodiment of the disclosure.

Referring to FIG. 1B, the communication system 10b may include a first UWB device 100b and a second UWB device 200b. The first UWB device 100b and/or the second UWB device 200b of FIG. 1B may be an example of the UWB device 100a of FIG. 1A.

The first UWB device 100b may include a UWB-enabled application layer 110b, a framework 120b, at least one UWB transceiver 130b, and/or at least one NB transceiver 140b.. The second UWB device 200b may include a UWB-enabled application layer 210b, a framework 220b, at least one UWB transceiver 230b, and/or at least one NB transceiver 240b.

In FIG. 1B, the UWB transceiver and the NB transceiver of each device are illustrated as separate components, but the components are divided according to their operations/functions. In other words, the UWB transceiver and the NB transceiver are not limited as implemented as separate physical components (e.g., separate chipsets). Accordingly, the UWB transceiver and the NB transceiver each may be implemented as a separate chipset, or the UWB transceiver and the NB transceiver may be implemented as one integrated chipset.

The UWB-enabled application layers 110b and 210b may be upper application layers for UWB services.

The framework 120b or 220b may be an entity that collectively manages the UWB transceiver 130b or 230b and the NB transceiver 140b or 240b. In an embodiment, the framework 120b or 220b may support a function to control UWB/NB communication (e.g., medium access control (MAC) or UWB/NB transceiver synchronization function) and/or a function for communicating obtained information to a higher application layer 110b or 210b.

The UWB transceiver 130b or 230b may support at least one of candidate UWB channels allocated for UWB communication. In other words, the UWB transceiver 130b or 230b may support at least one UWB channel. At least one UWB channel supported by the UWB transceiver 130b or 230b or the UWB transceiver 130b or 230b may be used for UWB communication (e.g., UWB ranging and/or transaction). For example, at least one UWB channel supported by the UWB transceiver 130b or 230b or the UWB transceiver 130b or 230b may be used for transmitting/receiving a ranging frame RFRAME and/or a data frame.

The NB transceiver 140b or 240b may support at least one NB channel having a narrower bandwidth (e.g., 50 MHz or less) than a UWB channel. At least one NB channel supported by the NB transceiver 140b or 240b or the NB transceiver 140b or 240b may be used for advertisement (discovery) and/or narrowband signaling.

In an embodiment, the NB channel may be a subchannel of one of the candidate UWB channels allocated for UWB communication. In another embodiment, the NB channel may be a channel using a specific bandwidth of another available band (e.g., some of industrial, scientific and medical (ISM) bands).

As an embodiment, the NB channel may be used for in-band communication, like the UWB channel. In an embodiment, at least one or at least one of channels using a specific bandwidth of an available band (e.g., part of the industrial, scientific, and medical (ISM) band) may be allocated as the mirroring channel. In an embodiment, the mirroring channel may be used to transfer the advertisement message.

Further, at least one of the remaining subchannel(s) or channel(s) not allocated as the mirroring channel may be allocated as a channel for connection setup (connection setup channel). In the disclosure, the channel for connection setup may be referred to as a second subchannel, an NB connection setup channel, or a sub advertisement channel.

In an embodiment, the connection setup channel may be used for transferring an additional advertisement message including additional advertising information not transmitted through the advertisement channel, for additional parameter negotiation, or for authentication. In this disclosure, the additional advertisement message may be referred to as a second advertisement message or an additional NB advertisement message.

In an embodiment, the discovery channel may be used to transfer discovery beacons and for connection setup. As such, when the discovery channel is used, device discovery and connection setup may be performed through one channel. In contrast, when using the mirroring channel, a separate connection setup channel needs to be allocated for connection setup.

The NB channel has a narrower bandwidth than the UWB channel. However, the band of the NB channel may be the same as or different from the band of the UWB channel. For example, the NB channel and the UWB channel may use different bands. For example, the channel number (or band group number) of the candidate UWB channel including the subchannel(s) allocated as the NB channel and the channel number (or band group number) of the candidate UWB channel allocated as the UWB channel may be different from each other. As another example, the NB channel and the UWB channel may use the same band. For example, the channel number (or band group number) of the candidate UWB channel including the subchannel(s) allocated as the NB channel and the channel number (or band group number) of the candidate UWB channel allocated as the UWB channel may be identical to each other.

In an embodiment, the first UWB device 100b and the second UWB device 200b may perform a UWB communication (procedure) (in-band communication) through a first radio link (UWB channel) established through the UWB transceiver 110b of the first UWB device 100b and the UWB transceiver 210b of the second UWB device 200b.

In an embodiment, the first UWB device 100b and the second UWB device 200b may perform an NB communication (procedure) (in-band communication) through a second radio link (NB channel) established through the NB transceiver 110b of the first UWB device 100b and the NB transceiver 210b of the second UWB device 200b.

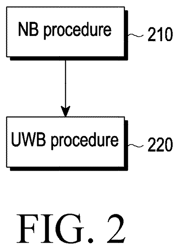

FIG. 2 illustrates a method for performing an NB procedure and a UWB procedure by a UWB device according to an embodiment of the disclosure.

The UWB device of FIG. 2 may be, e.g., the UWB device of FIG. 1A or 1B.

Referring to FIG. 2, the UWB device may perform the NB procedure 210 and the UWB procedure 220. The NB procedure 210 and UWB procedure 220 may be managed or controlled by the MAC layer (entity) of the UWB device.

### (1) NB procedure 210

In the disclosure, the NB procedure 210 means a procedure performed using at least one NB channel. The NB procedure 210 may be performed before the UWB procedure 220.

The NB procedure 210 may include at least one of the following operations.
- An operation in which the UWB device transmits and/or receives an advertisement message through at least one mirroring channel (advertising operation)
- An operation in which the UWB device transmits and/or receives a discovery beacon (message) through at least one discovery channel (discovery operation)
- An operation in which the UWB device transmits and/or receives an additional advertisement message, a connection request message, and/or a connection confirmation message through at least one connection setup channel (first connection setup operation)
- An operation in which the UWB device transmits and/or receives a connection request message and/or a connection confirmation message through at least one discovery channel (second connection setup operation)

### (2) UWB procedure 220

In the disclosure, the UWB procedure 220 means a procedure performed using at least one UWB channel.

The UWB procedure 220 may include at least one of the following operations.
- An operation in which a UWB device performs UWB ranging with another UWB device (UWB ranging operation)
- An operation in which a UWB device exchanges service data with another UWB device (transaction operation)

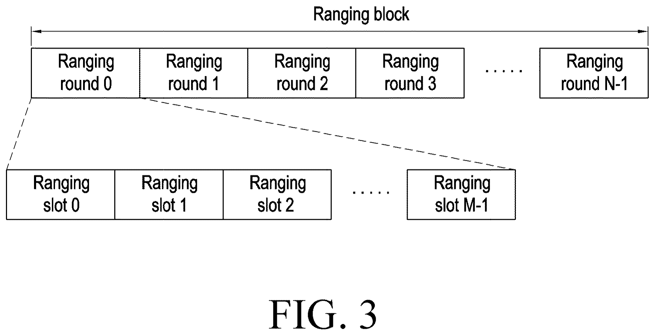

FIG. 3 illustrates an example of a structure of a ranging block and round used for UWB ranging according to an embodiment of the disclosure;

In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

As shown in FIG. 3, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds. This may be configured through a control message from the Controller.

In the disclosure, ranging round may be abbreviated as a round, ranging block as a block, and ranging slot as a slot.

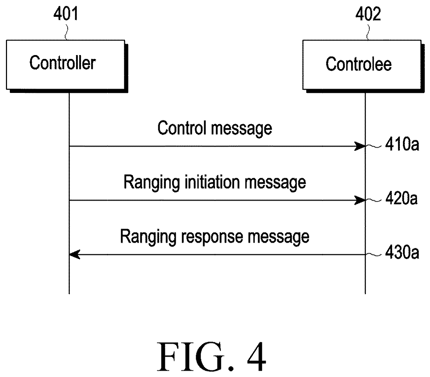

FIG. 4 illustrates a UWB ranging operation according to an embodiment of the disclosure.

The UWB ranging operation of FIG. 4 may be an example of the UWB ranging operation of the UWB procedure of FIG. 2. The UWB ranging operation of FIG. 4 may be performed through a UWB channel.

In the embodiment of FIG. 4, UWB ranging may be, e.g., single-sided two-way ranging (SS-TWR) or double-sided two-way ranging (DS-TWR).

In the embodiment of FIG. 4, it is assumed that the Controller 401 serves as an Initiator, and the Controlee 402 serves as a Responder.

Referring to operation 410a, the Controller 401 may transmit a control message (ranging control message) for controlling UWB ranging to the Controlee 402. For example, the Controller 401 may transmit a control message to the Controlee 402 through a UWB channel. In an embodiment, the control message may include information about the role (e.g., Initiator or Responder) of the UWB device, ranging slot index information, and/or address information about the UWB device.

Referring to operation 420a, the Controller (Initiator) 401 may transmit a ranging initiation message for starting the ranging exchange to the Controlee (Responder) 402. For example, the Controller (Initiator) 401 may transmit a ranging initiation message to the Controlee (Responder) 402 through the UWB channel.

Referring to operation 430a, the Controlee (Responder) 402 may transmit a ranging response message corresponding to the ranging initiation message to the Controller (Initiator) 401. For example, the Controlee (Responder) 402 may transmit a ranging response message to the Controller (Initiator) 403 through the UWB channel.

In an embodiment, the ranging response message may further include first measurement report information. The first measurement report message may include, e.g., an AoA measurement, a reply time measured by the Responder and/or a list of round-trip time measurements for Responders and Responder addresses. The reply time may indicate a time difference between the reception time of the ranging initiation message and the transmission time of the ranging reply message at the Responder side. Based on this, single-sided two-way ranging (SS-TWR) may be performed. Calculation of time-of- flight (ToF) and distance/direction/position through SS-TWR follows the scheme defined in IEEE 802.15.4z.

Meanwhile, in the case of the DS-TWR, the Controller (Initiator) 401 may further transmit a ranging final message (ranging response message) for completing ranging to the Controlee (Responder) 402. For example, the Controller (Initiator) 401 may further transmit the ranging final message to the Controlee (Responder) 402 through the UWB channel.

In an embodiment, the ranging final message may further include second measurement report (measurement report) information. The second measurement report information may include an AoA measurement, the round-trip time for the first Responder (first round-trip time) and/or a list of reply time measurements for Responders and Responder addresses. The first round-trip time may indicate a time difference between the ranging reply message from the Responder and the ranging final message from the Initiator. Based on this, single-sided two-way ranging (DS-TWR) may be performed. Calculation of time-of-flight (ToF) and distance/direction/position through DS-TWR follows the scheme defined in IEEE 802.15.4z.

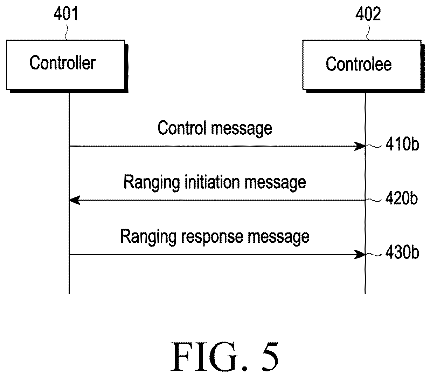

FIG. 5 illustrates a UWB ranging operation according to another embodiment of the disclosure.

The UWB ranging operation of FIG. 5 may be an example of the UWB ranging operation of the UWB procedure of FIG. 2. The UWB ranging operation of FIG. 5 may be performed through a UWB channel.

In the embodiment of FIG. 5, UWB ranging may be, e.g., single-sided two-way ranging (SS-TWR) or double-sided two-way ranging (DS-TWR).

In the embodiment of FIG. 5, unlike the embodiment of FIG. 4, it is assumed that the Controller 401 serves as a Responder, and the Controlee 402 serves as an Initiator.

Referring to operation 410b, the Controller 401 may transmit a control message (ranging control message) for controlling UWB ranging to the Controlee 402. For example, the Controller 401 may transmit a control message to the Controlee 402 through a UWB channel.

In an embodiment, the control message may include information about the role (e.g., Initiator or Responder) of the UWB device, ranging slot index information, and/or address information about the UWB device.

Referring to operation 420b, the Controlee (Initiator) 402 may transmit a ranging initiation message for starting the ranging exchange to the Controller (Responder) 401. For example, the Controlee (Initiator) 402 may transmit a ranging initiation message to the Controller (Responder) 401 through the UWB channel.

Referring to operation 430b, the Controller (Responder) 401 may transmit a ranging response message corresponding to the ranging initiation message to the Controlee (Initiator) 402. For example, the Controller (Responder) 401 may transmit a ranging response message to the Controlee (Initiator) 402 through the UWB channel. In an embodiment, the ranging response message may further include first measurement report information. The first measurement report message may include, e.g., an AoA measurement, a reply time measured by the Responder and/or a list of round-trip time measurements for Responders and Responder addresses. The reply time may indicate a time difference between the reception time of the ranging initiation message and the transmission time of the ranging reply message at the Responder side. Based on this, single-sided two-way ranging (SS-TWR) may be performed. Calculation of time-of-flight (ToF) and distance/direction/position through SS-TWR follows the scheme defined in IEEE 802.15.4z.

Meanwhile, in the case of the DS-TWR, the Controlee (Initiator) 402 may further transmit a ranging response message for completing ranging to the Controller (Responder) 401. For example, the Controlee (Initiator) 402 may further transmit the ranging final message to the Controller (Responder) 401 through the UWB channel.

In an embodiment, the ranging final message may further include second measurement report (measurement report) information. The second measurement report information may include an AoA measurement, the round-trip time for the first Responder (first round-trip time) and/or a list of reply time measurements for Responders and Responder addresses. The first round-trip time may indicate a time difference between the ranging reply message from the Responder and the ranging final message from the Initiator. Based on this, single-sided two-way ranging (DS-TWR) may be performed. Calculation of time-of-flight (ToF) and distance/direction/position through DS-TWR follows the scheme defined in IEEE 802.15.4z.

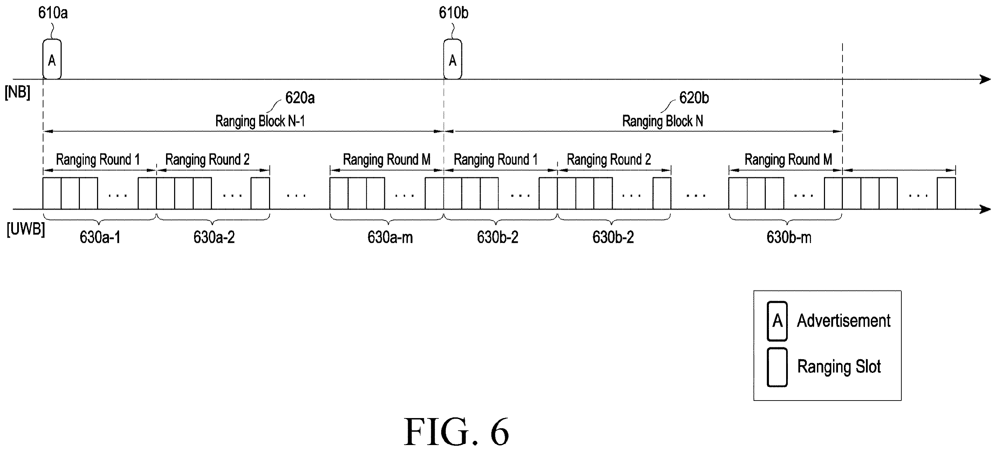

FIG. 6 illustrates a structure of a channel used in a ranging area network according to an embodiment of the disclosure.

In the disclosure, a ranging area network (RAN) may be a network including a plurality of UWB devices performing UWB ranging. The ranging area network may be referred to as a new generation (NG) ranging area network (NRAN), and the UWB device may be referred to as an NG UWB device.

In the embodiment of FIG. 6, the ranging block, the ranging round, and the ranging slot transmitted through the UWB channel may be the ranging block, the ranging round, and the ranging slot used in the session (e.g., a UWB ranging session) already established by the UWB device (e.g., the first UWB device of FIG. 6) serving as an Advertiser/Controller.

Referring to FIG. 6, the mirroring channel and UWB channel may be used in the ranging area network.

In an embodiment, the mirroring channel may be used to transmit and/or receive at least one advertisement message. For example, the mirroring channel may be used to transmit/receive a first advertisement message 610a and a second advertisement message 610b. Further, a connection setup channel may be further used in the ranging area network to transmit and/or receive at least one additional advertisement message, connection request message and/or connection confirmation message.

In an embodiment, the UWB channel may be used to transmit and/or receive at least one ranging message for UWB ranging. At least one ranging message may be transmitted/received through the ranging blocks 620a and 620b.

As described above with reference to FIG. 3, each ranging block may include at least one ranging round, and each ranging round may include at least one ranging slot. For example, the first ranging block 620a may include M ranging rounds 630a-1, 630a-2,... 630a-m. Each ranging round may include a plurality of ranging slots. Further, the second ranging block 620b may include M ranging rounds 630b-1, 630b-2,... 630b-m. Each ranging round may include a plurality of ranging slots.

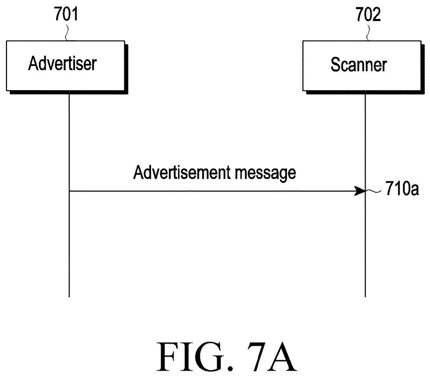

FIG. 7A illustrates an advertising operation according to an embodiment of the disclosure.

The advertising operation of FIG. 7A may be an example of the advertising operation of the NB procedure 210 of FIG. 2.

In the embodiment of FIG. 7A, the first UWB device 701 may be a UWB device serving as an Advertiser and a Controller. The second UWB device 701 may be a UWB device serving as a Scanner and a Controlee.

The advertising operation of FIG. 7A may be an advertising/discovery operation performed through the mirroring channel.

Referring to FIG. 7A, in operation 710a, the first UWB device 701 may transmit an advertisement message. In an embodiment, the first UWB device 701 may broadcast an advertisement message through at least one mirroring channel. In this case, the second UWB device 702 may scan at least one mirroring channel to receive the advertisement message. Thus, the second UWB device 702 may obtain device discovery and/or advertising information.

In an embodiment, the mirroring channel may be a channel previously known to the first UWB device 701 and the second UWB device 702. For example, the mirroring channel may be included in the information provided when installing the related UWB-enabled application, be a hard-coded default channel, or be a channel shared between the first UWB device 701 and the second UWB device 702 in other various manners. As described above, the mirroring channel may be one subchannel(s) among the candidate UWB channels.

In an embodiment, the advertisement message may include at least one of information about the start time of the ranging round, information about the channel occupancy time (e.g., information about the channel occupancy time represented as a multiple of time unit (TU)), information about the length of the ranging block, information about the ranging round, or information about the number of active rounds or active round number. Here, the active round may be a ranging round that is actually used (or occupied) among the ranging rounds.

In an embodiment, the advertisement message may include information about the session ID of the session (e.g., ranging session) (session ID information) and/or information (address information) about the address (e.g., the MAC address of the UWB device) of the UWB device transmitting the advertisement message. In an embodiment, the advertisement message may include numbering information for indicating which number of active round among all the active rounds in the corresponding ranging block the advertisement message corresponds to.

In an embodiment, the advertisement message may include information (transmission time information) about the transmission time of the subsequent corresponding advertisement message. For example, the advertisement message or transmission time information may include what number of slot the corresponding advertisement message starts to be transmitted (transmission slot indication information) and/or information about the length of the slot (slot length information).

In an embodiment, the advertisement message may include information about the period of the ranging block in which the advertisement message is transmitted. For example, the advertisement message or information about the period of the ranging block may include information (first information) about how many ranging blocks have been skipped or information (second information) about the number of consecutive ranging blocks where an advertisement message is not transmitted.

When the advertising information obtained through the operation of FIG. 7A includes all information necessary to perform UWB communication (UWB procedure), the second UWB device 702 may perform the above-described operations of FIG. 7A and then immediately perform a UWB procedure.

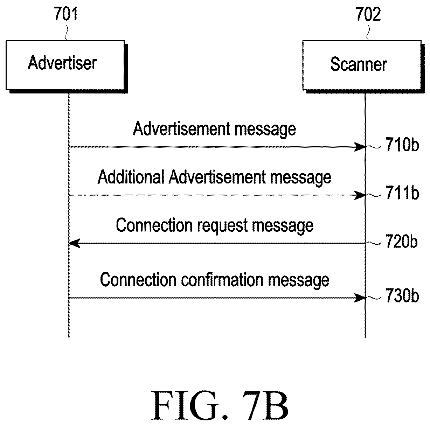

However, depending on an embodiment, the advertising information may include only a part of information necessary to perform the UWB procedure. In other words, additional advertising information may be further required to perform UWB communication. Alternatively, additional parameter negotiation or authentication may be further required to perform UWB communication. In this case, an additional advertising operation and/or connection setup operation for advertising information acquisition, additional parameter negotiation and/or authentication may further be performed. This is described below with reference to FIG. 7B.

FIG. 7B illustrates an advertising operation and a connection setup operation according to an embodiment of the disclosure.

The advertising operation and the connection setup operation of FIG. 7B may be an example of the advertising operation and the first connection setup operation of the NB procedure of FIG. 2.

In the embodiment of FIG. 7B, the first UWB device 701 may be a UWB device serving as an Advertiser and a Controller. The second UWB device 701 may be a UWB device serving as a Scanner and a Controlee.

The advertising operation of FIG. 7B may be an advertising operation performed through the mirroring channel, and the connection setup operation may be a connection setup operation performed through the connection setup channel.

Referring to FIG. 7B, in operation 710b, the first UWB device 701 may transmit an advertisement message. For example, the first UWB device 701 may broadcast an advertisement message through at least one mirroring channel. In this case, the second UWB device 702 may scan at least one mirroring channel to receive the advertisement message. Thus, the second UWB device 702 may obtain device discovery and/or advertising information.

According to an embodiment, when additional advertising information is further required, the following operation 711b may be further performed. Operation 711b may be an optional operation.

In operation 711b, the first UWB device 701 may transmit an additional advertisement message. For example, the first UWB device 701 may broadcast an additional advertisement message through a connection setup channel. In this case, the second UWB device 702 may receive the additional advertisement message by scanning the connection setup channel. In an embodiment, information about the NB connection setup channel may be included in the advertisement message of operation 710b.

Through the additional advertising operation of operation 711b, the second UWB device 702 may further obtain additional advertising information.

Further, when additional parameter negotiation and/or authentication (connection setup) is required, the following operations 720b and 730b may be further performed. Operations 720b and 730b may be optional operations.

In operation 720b, the second UWB device 702 may transmit a connection request message to the first UWB device. For example, the second UWB device 702 may transmit a connection request message to the first UWB device through a connection setup channel. In an embodiment, the connection request message may include parameter(s) for the performance of the Controlee and/or information for authentication.

In operation 730b, the first UWB device 701 may transmit a connection confirmation message to the second UWB device in response to the connection request message. For example, the first UWB device 701 may transmit a connection confirmation message to the second UWB device through a connection setup channel. In an embodiment, the connection confirmation message may include parameter(s) for UWB setup, parameter(s) for a session key for protecting the UWB session, and/or information for authentication.

Through the connection setup operations of operations 720b and 730b, negotiation and/or authentication of additional parameters may be performed.

Meanwhile, the message exchange operations of operations 720b and 730b may be repeatedly performed as many times as necessary. For example, if additional message exchange is required (i.e., if message exchange is required for additional parameter negotiation and/or authentication) after performing message exchange of operations 720b and 730b once, the message exchange operations of operations 720b and 730b may be further performed as many as necessary on the corresponding connection setup channel (sub advertisement channel).

As compared to the embodiment of FIG. 7(a), the embodiment of FIG. 7(b) may reduce the congestion of the mirroring channel and enables efficient operation of a plurality of NB channels. Meanwhile, as compared with the embodiment of FIG. 7(b), the embodiment of FIG. 7(a) may perform a faster NB procedure, thereby shortening the entire time for providing the UWB service. Therefore, it is necessary to flexibly set an appropriate NB procedure and NB channel operation scheme considering the number of UWB devices participating in UWB ranging, the surrounding environment, and the like.

In the disclosure, the discovery procedure may be performed using the advertisement message transmitted through the mirroring channel, as well as the discovery beacon (message) transmitted through the discovery channel.

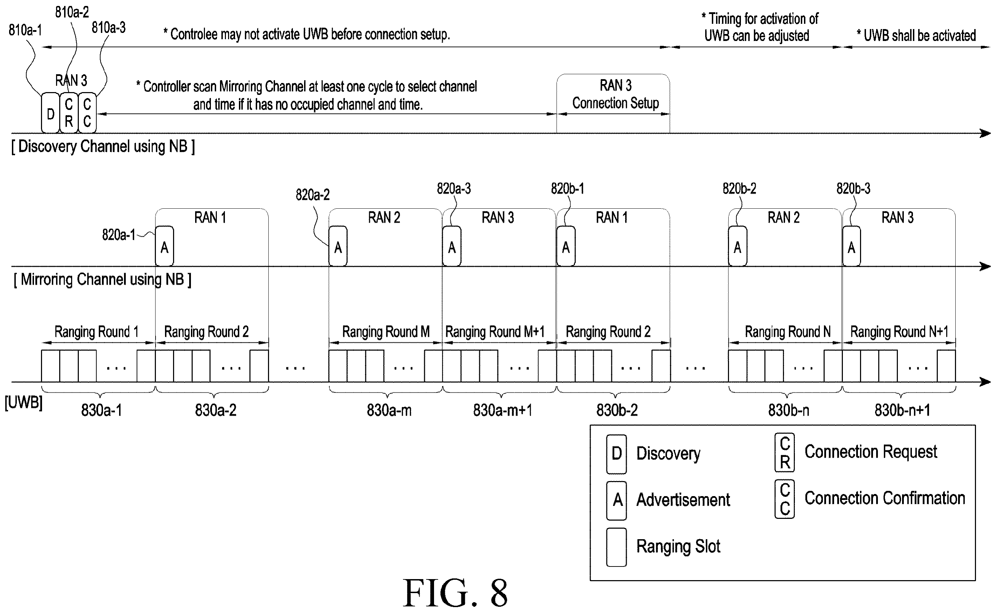

FIG. 8 illustrates a structure of a channel used in a ranging area network according to an embodiment of the disclosure.

In the embodiment of FIG. 8, it is assumed that a plurality of ranging area networks (RANs) (e.g., RAN1, RAN2, and RAN3) exist. In the embodiment of FIG. 8, it is assumed that one UWB channel is shared by the plurality of RANs. For example, as shown, the UWB channel may be shared by RAN1, RAN2 and RAN3.

Further, in the embodiment of FIG. 8, it is assumed that a UWB channel (e.g., at least one ranging round of the UWB channel) is previously occupied for some RANs sharing the corresponding UWB channel. For example, ranging round 2 830a-2 of the first ranging block and ranging round 2 830b-2 of the second ranging block may be occupied for RAN1. Ranging round M 830a-m of the first ranging block and ranging round N 830b-n of the second ranging block may be occupied for RAN2. In an embodiment, M and N may be the same or different numbers. As an embodiment, the index of the ranging round occupied by the same RAN may be the same or different for each ranging block.

Meanwhile, the UWB channel (e.g., at least one ranging round of the UWB channel) may not be pre-occupied for RAN3. Accordingly, a discovery procedure and connection setup procedure for RAN3 need to be performed through a discovery channel.

According to an embodiment, the UWB channel and at least one specific round of the UWB channel may be pre-occupied by the Controller of RAN1 and the Controller of RAN2. As an embodiment, the configuration of the ranging block, ranging round, and ranging slot transmitted through the UWB channel may be set by the Controller of RAN1 or the Controller of RAN2.

As an embodiment, the Advertiser of the corresponding RAN may transmit the advertisement message through the mirroring channel coupled (or synchronized) with the UWB channel for the corresponding RAN. For example, the Advertiser of RAN1 may transmit the advertisement message 820a-1 or 820b-1 through the mirroring channel at a specific time of the ranging round 830a-2 or 830b-2 of the UWB channel for RAN1 (e.g., the start time of the first slot of the corresponding ranging round or the time when a transmission offset is applied in the first slot of the corresponding ranging round). As another example, the Advertiser of RAN2 may transmit the advertisement message 820a-2 or 820b-2 through the mirroring channel at a specific time of the ranging round 830a-m or 830b-n of the UWB channel for RAN2 (e.g., the start time of the first slot of the corresponding ranging round or the time when a transmission offset is applied in the first slot of the corresponding ranging round).

As an embodiment, the Scanner of the corresponding RAN may receive the advertisement message by scanning the mirroring channel. Thereafter, the Scanner of the corresponding RAN may perform an operation based on the received advertisement message. For the operation based on the advertisement message, refer to the description made above with reference to FIGS. 6 to 8.

According to an embodiment, the UWB channel and at least one specific round of the UWB channel may be in a state not pre-occupied by the Controller of RAN3. In this case, the Advertiser of RAN3 may not transmit an advertisement message for discovery through the mirroring channel. As an embodiment, the Advertiser of RAN3 may transmit a discovery beacon (message) 810a-1 for discovery through the discovery channel. As an embodiment, the Advertiser of RAN3 may be a Controller or a Controlee.

As an embodiment, the UWB device (e.g., Controlee) that has received the discovery beacon may transmit the connection request (CR) message 810a-2 to the UWB device (e.g., the Controller) that has transmitted the discovery beacon. Further, the UWB device (e.g., the Controller) that has received the connection request message 810a-2 may transmit a connection confirmation (CC) message 810a-3 to the UWB device (e.g., Controlee) that has transmitted the connection request message 810a-2.

As an embodiment, the discovery beacon (message), connection response message, and connection confirmation message may be transmitted in the period corresponding to one ranging round. For example, as shown, the discovery beacon (message) 810a-1, connection response message 810a-2, and/or connection confirmation message 810a-3 for RAN3 may be transmitted during the period corresponding to the first ranging round 830a-1 of the first ranging block.

According to an embodiment, the UWB channel is in a state not pre-occupied by the Controller of RAN3. In this case, the Controller of RAN3 may scan the mirroring channel in at least one cycle to select the UWB channel and time. The Controller may identify the status of the UWB channel through the mirroring channel scanning and, based thereupon, select and occupy the UWB channel/time to be used. For example, as shown, the Controller may identify the status of the UWB channel through mirroring channel scanning and may select and occupy the non-occupied ranging round 830a-m 1 or 830b-n+1 for other RANs of the corresponding UWB channel.

After the UWB channel and time are occupied by the Controller of RAN3, a connection setup procedure for RAN3 may be performed. As an embodiment, the Controller may transmit information for communication in the newly occupied UWB channel to the Controlee through the connection setup process. As an embodiment, the Controller may provide information for communication in the UWB channel to the Controlee through a connection confirmation message. For example, the Controller may receive a connection request message from the Controlee through the discovery channel and may provide information for communication in the UWB channel to the Controlee through the connection confirmation message corresponding to the connection request message through the discovery channel.

As an embodiment, the connection confirmation message may include information about the UWB channel and/or ranging round (or start time of UWB communication) to be used. For example, the connection confirmation message may include information indicating that UWB communication may be performed in the ranging round N+1 (830b-n+1) occupied for RAN3. In this case, the Controlee may participate in the corresponding ranging round of the corresponding UWB channel based on the connection confirmation message. Thus, the Controller and the Controlee may perform UWB communication (e.g., UWB ranging) in the corresponding UWB channel.

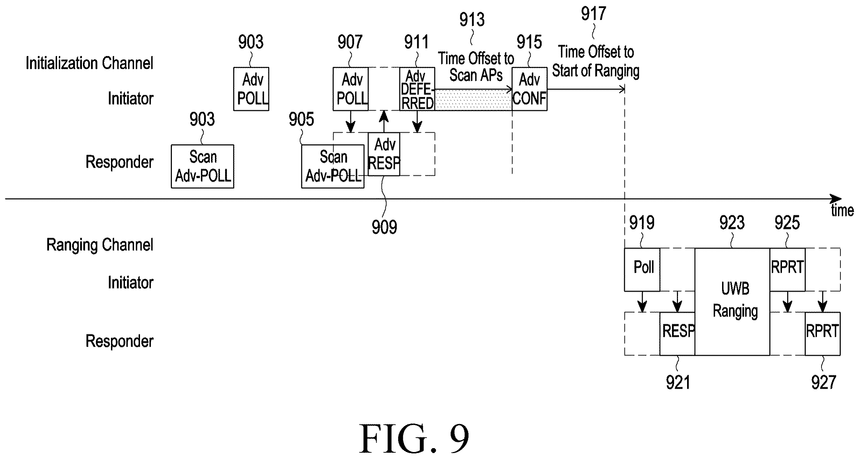

FIG. 9 is a view illustrating operations of an Initiator and a Responder according to an embodiment of the disclosure.

Referring to FIG. 9, an Initiator may be a device that initiates a ranging exchange, and a Responder may be a device that responds to the Initiator during the ranging exchange. An initialization channel may be implemented within an NB channel. For example, the initialization channel may be implemented as a discovery channel or a Coordination channel implemented within the NB channel. A ranging channel may be implemented as a channel for ranging included within a UWB channel and/or an NB channel. The Coordination channel may be implemented within an NB channel or a UWB channel as a channel where an Acquisition Packet is transmitted.

In operation 901, the Responder may scan for an Advertisement Poll message within a set time interval within the initialization channel and may not receive the Advertisement Poll message. In operation 903, the Initiator may transmit (or broadcast) an Advertisement Poll message in the initialization channel. According to an embodiment, the Advertisement Poll message may be a discovery message (or beacon) transmitted or broadcast by the Controller and/or the Initiator.

In operation 905, the Responder may scan for an Advertisement Poll message within a set time interval within the initialization channel. In operation 907, the Responder may receive the Advertisement Poll message transmitted by the Initiator according to the scan result. In operation 909, the Responder may transmit an Advertisement Response message corresponding to the Advertisement Poll message to the Initiator within the initialization channel. According to an embodiment, the Advertisement Response message may be a connection response message of the Responder responding to the Advertisement Poll message.

In operation 911, the Initiator may transmit an Advertisement Deferred message corresponding to the Advertisement Response message to the Responder within the initialization channel. According to an embodiment, the Advertisement Deferred message may be a connection identification message transmitted by the Controller and/or the Initiator in response to the Advertisement Response message. In operation 913, the Initiator may set and/or apply a first time offset for scanning at least one AP within the initialization channel.

In the disclosure, the Initiator may optionally perform operation 911 and/or operation 913 (i.e., the Initiator may not transmit the Advertisement Deferred message or may not set the first time offset). According to an embodiment, the Initiator may perform operation 915 after operation 911 and operation 913. According to another embodiment, the Initiator may not perform operation 911 and operation 913, and may directly transmit an Advertisement Confirmation message according to operation 915 in response to the Advertisement Response message.

In operation 915, the Initiator may transmit an Advertisement Confirmation message within the initialization channel. In operation 917, the Initiator may set and/or apply a second time offset for ranging initiation within the initialization channel. The second time offset may be a time offset before the Initiator and the Responder initiate ranging within the ranging channel.

According to an embodiment, the Initiator and/or the Responder may determine in advance whether a UWB channel (or ranging channel) is available before UWB session setup. According to an embodiment, the Initiator and/or the Responder may determine the availability of the UWB channel (or ranging channel) using a default value. According to an embodiment, when the availability of the UWB channel (or ranging channel) is not Known, the Initiator and/or the Responder may set a predetermined time for a determination operation of the availability of the UWB channel (or ranging channel).

According to an embodiment, the availability of the UWB channel (or ranging channel) may be determined based on UWB channel usage information transmitted by the Controller and/or the Initiator in the NB channel and/or the UWB channel. According to an embodiment, the UWB channel usage information may be transmitted through an acquisition packet (AP) transmitted by the Controller and/or the Initiator in the NB channel and/or the UWB channel. According to an embodiment, the Controller and/or the Initiator may obtain usage time information for the UWB channel through AP reception for a predetermined time. According to an embodiment, the Controller and/or the Initiator may minimize overlap between Active time intervals of a newly starting session and existing sessions based on the obtained usage time information.

In operation 919, the Initiator may transmit a poll message for ranging to the Responder within the ranging channel. In operation 921, the Responder may transmit a Response message responding to the poll message to the Initiator within the ranging channel. According to an embodiment, the ranging channel where the poll message and the Response message are transmitted and received may be implemented within the NB channel.

In operation 923, the Initiator and the Responder may perform UWB ranging within the ranging channel. According to an embodiment, the ranging channel where the UWB ranging is performed may be implemented within the UWB channel.

In operation 925, the Initiator may transmit Report (RPRT) information of the Initiator to the Responder within the ranging channel. In operation 927, the Responder may transmit Report (RPRT) information of the Responder to the Initiator within the ranging channel. According to an embodiment, the ranging channel where the RPRT information is transmitted and received may be implemented within the NB channel or the UWB channel.

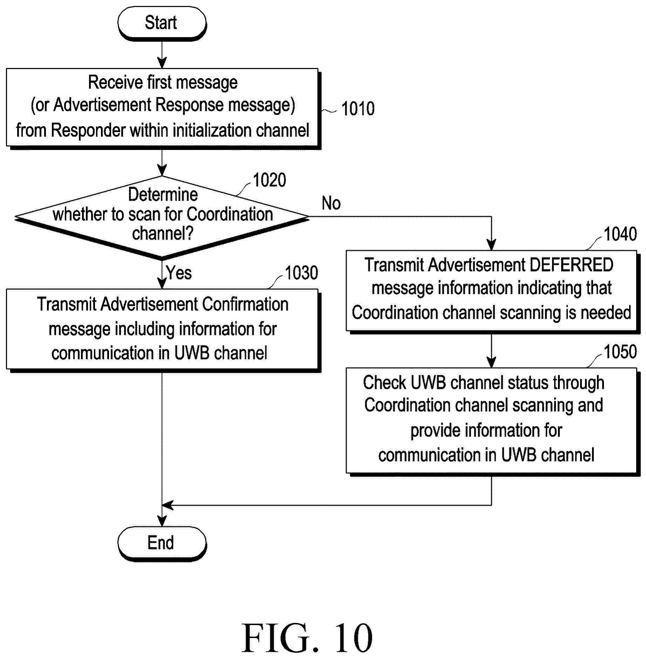

FIG. 10 illustrates a connection setup operation of an Initiator according to an embodiment of the disclosure.

Referring to FIG. 10, in operation 1010, the Initiator may receive a first message (or Advertisement Response message) from the Responder within an initialization channel. In operation 1020, the Initiator may determine whether to scan for a Coordination channel. According to an embodiment, the Coordination channel may be implemented within an NB channel or a UWB channel as a channel where an Acquisition Packet is transmitted. According to an embodiment, the Initiator may perform subsequent operations differently according to whether to scan for the Coordination channel regardless of UWB channel occupancy.

If scanning for the Coordination channel is not performed (1020-No), in operation 1030, the Initiator may transmit an Advertisement Confirmation message including information for communication in the UWB channel to the Responder. According to an embodiment, the Initiator may participate in the corresponding UWB channel and the corresponding ranging round based on the information for communication in the UWB channel. Accordingly, the Initiator and the Responder may perform UWB communication (e.g., UWB ranging) in the corresponding UWB channel.

If scanning for the Coordination channel is performed (1020-Yes), in operation 1040, the Initiator may transmit an Advertisement Deferred message including information indicating that scanning for the Coordination channel is needed to the Responder. In operation 1050, the Initiator may identify the UWB channel status through scanning for the Coordination channel and provide information for communication in the UWB channel to the Responder. According to an embodiment, the Initiator may transmit an Advertisement Confirmation message including the information for communication in the UWB channel to the Responder.

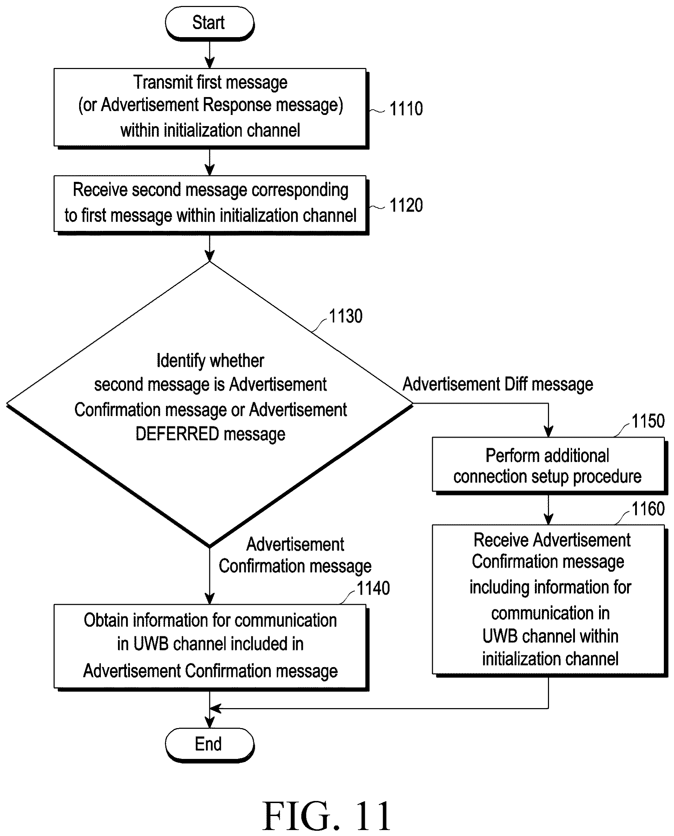

FIG. 11 illustrates a connection setup operation of a Responder according to an embodiment of the disclosure.

Referring to FIG. 11, in operation 1110, the Responder may transmit a first message (or Advertisement Response message) to the Initiator within an initialization channel. In operation 1120, the Responder may receive a second message (Advertisement Deferred message or Advertisement Confirmation message) corresponding to the first message from the Initiator within the initialization channel.

In operation 1130, the Responder may identify whether the second message is an Advertisement Confirmation message or an Advertisement Deferred message.

If the second message is an Advertisement Confirmation message, in operation 1110, the Responder may obtain information for communication in the UWB channel included in the Advertisement Confirmation message. According to an embodiment, the Responder may participate in the corresponding UWB channel and the corresponding ranging round based on the information for communication in the UWB channel. Accordingly, the Initiator and the Responder may perform UWB communication (e.g., UWB ranging) in the corresponding UWB channel.

If the second message is an Advertisement Deferred message, in operation 1150, the Responder and/or the Initiator may perform an additional connection setup procedure. In operation 1160, the Responder may receive an Advertisement Confirmation message including information for communication in the UWB channel from the Initiator within the initialization channel. The Responder may participate in the corresponding UWB channel and the corresponding ranging round based on the information for communication in the UWB channel. Accordingly, the Initiator and the Responder may perform UWB communication (e.g., UWB ranging) in the corresponding UWB channel.

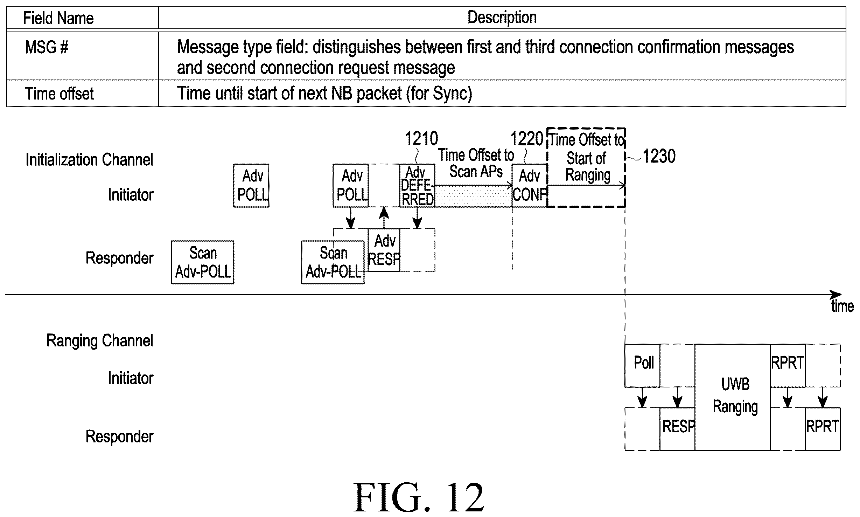

FIG. 12 illustrates an example of fields included in an Advertisement identification message according to an embodiment of the disclosure.

The operations of the Initiator and the Responder illustrated in FIG. 12, except for operations 1210 to 1230, are the same or substantially the same as the corresponding operations of the Initiator and the Responder described above in FIG. 9, and thus detailed descriptions thereof are omitted.

Referring to FIGS. 9 and 12, in operation 1210, the Initiator may transmit an Advertisement Deferred message corresponding to the Advertisement Response message to the Responder within the initialization channel.

According to an embodiment, the Initiator may optionally perform operation 1210 (i.e., the Initiator may not transmit the Advertisement Deferred message). According to an embodiment, the Initiator may not perform operation 1210 and may transmit an Advertisement Confirmation message according to operation 1220 in response to the Advertisement Response message.

In operation 1220, the Initiator may transmit an Advertisement Confirmation message within the initialization channel. In operation 1230, the Initiator may set and/or apply a time offset for ranging initiation within the initialization channel.

The Advertisement Confirmation message may include a field (MSG#) indicating the message type of the corresponding message and a time offset field. The field (MSG#) indicating the message type may indicate whether the corresponding message is an Advertisement Confirmation message or an Advertisement Deferred message. The field (MSG#) indicating the message type may indicate that the corresponding message is the Advertisement Confirmation message. The time offset field may be the time offset applied in operation 1230. According to an embodiment, the time offset field may indicate a time until the start time of the next NB packet (e.g., poll message) (for synchronization).

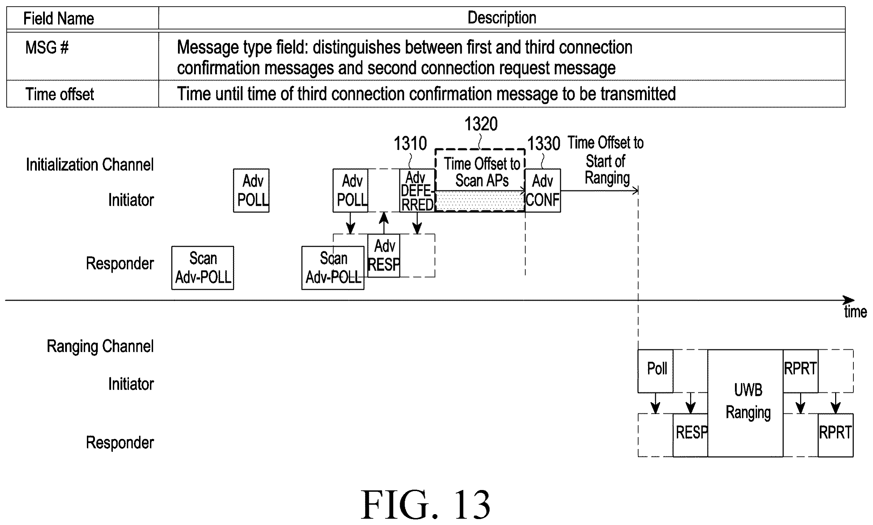

FIG. 13 illustrates an example of fields included in an Advertisement Deferred message according to an embodiment of the disclosure.

The operations of the Initiator and the Responder illustrated in FIG. 13, except for operations 1310 to 1330, are the same or substantially the same as the corresponding operations of the Initiator and the Responder described above in FIG. 9, and thus detailed descriptions thereof are omitted.

Referring to FIGS. 9 and 13, in operation 1310, the Initiator may transmit an Advertisement Deferred message corresponding to the Advertisement Response message to the Responder within the initialization channel.

The Advertisement Deferred message may include a field (MSG#) indicating the message type of the corresponding message and a time offset field. The field (MSG#) indicating the message type may indicate whether the corresponding message is an Advertisement Confirmation message or an Advertisement Deferred message. The field (MSG#) indicating the message type may indicate that the corresponding message is the Advertisement Deferred message. The time offset field may be the time offset applied in operation 1320. According to an embodiment, the time offset field may indicate a time until transmitting or receiving the Advertisement Confirmation message.

In operation 1320, the Initiator may set and/or apply a time offset for scanning at least one AP within the initialization channel. In operation 1330, the Initiator may transmit an Advertisement Confirmation message after the first time offset within the initialization channel.

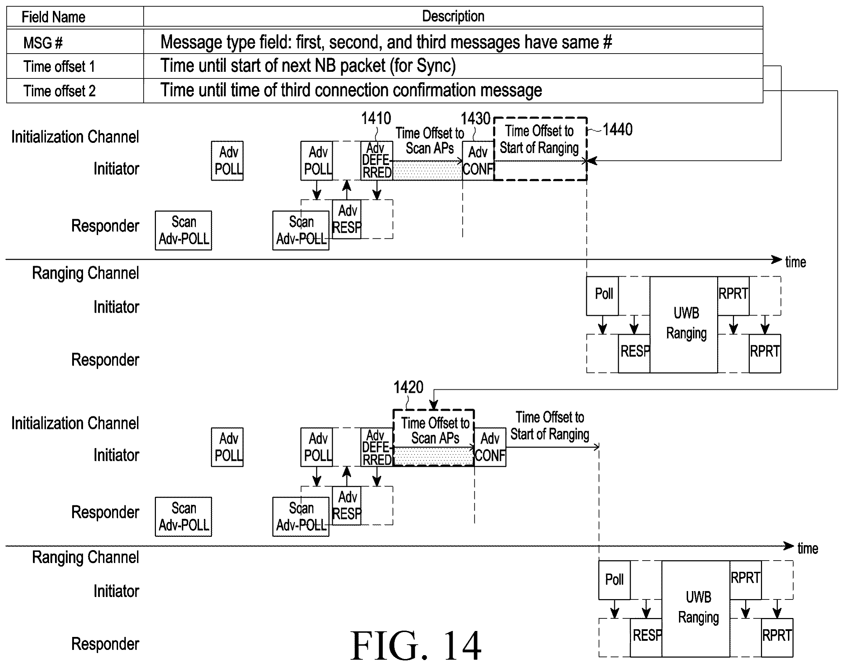

FIG. 14 illustrates an example of fields included in an Advertisement Deferred message or an Advertisement Confirmation message according to an embodiment of the disclosure.

The operations of the Initiator and the Responder illustrated in FIG. 14, except for operations 1410 to 1440, are the same or substantially the same as the corresponding operations of the Initiator and the Responder described above in FIG. 9, and thus detailed descriptions thereof are omitted.

Referring to FIGS. 9 and 14, in operation 1410, the Initiator may transmit an Advertisement Deferred message corresponding to the Advertisement Response message to the Responder within the initialization channel. According to an embodiment, the Advertisement Deferred message may be a connection identification message transmitted by the Controller and/or the Initiator in response to the Advertisement Response message.

According to an embodiment, the Advertisement Deferred message may include a field (MSG#) indicating the message type of the corresponding message, a first time offset field, and a second time offset field. For the field (MSG#) indicating the message type, the Advertisement Confirmation message and the Advertisement Deferred message may be set to the same value. The first time offset field may be the time offset applied in operation 1440. According to an embodiment, the first time offset field may indicate a time until the start time of the next NB packet (e.g., poll message) (for synchronization). The second time offset field may be the time offset applied in operation 1420. According to an embodiment, the second time offset field may indicate a time until transmitting or receiving the Advertisement Confirmation message.

In operation 1420, the Initiator may set and/or apply a time offset for scanning at least one AP within the initialization channel.

According to an embodiment, the Initiator may optionally perform each of operation 1410 and operation 1420 (i.e., the Initiator may not transmit the Advertisement Deferred message). According to an embodiment, the Initiator may not perform operation 1410 and may transmit an Advertisement Confirmation message according to operation 1430 in response to the Advertisement Response message.

In operation 1430, the Initiator may transmit an Advertisement Confirmation message within the initialization channel. In operation 1440, the Initiator may set and/or apply a time offset for ranging initiation within the initialization channel.

According to an embodiment, the Advertisement Confirmation message may include a field (MSG#) indicating the message type of the corresponding message, a first time offset field, and a second time offset field. For the field (MSG#) indicating the message type, the Advertisement Confirmation message and the Advertisement Deferred message may be set to the same value. The first time offset field may be the time offset applied in operation 1440. According to an embodiment, the first time offset field may indicate a time until the start time of the next NB packet (e.g., poll message) (for synchronization). The second time offset field may be the time offset applied in operation 1420. According to an embodiment, the second time offset field may indicate a time until transmitting or receiving the Advertisement Confirmation message.

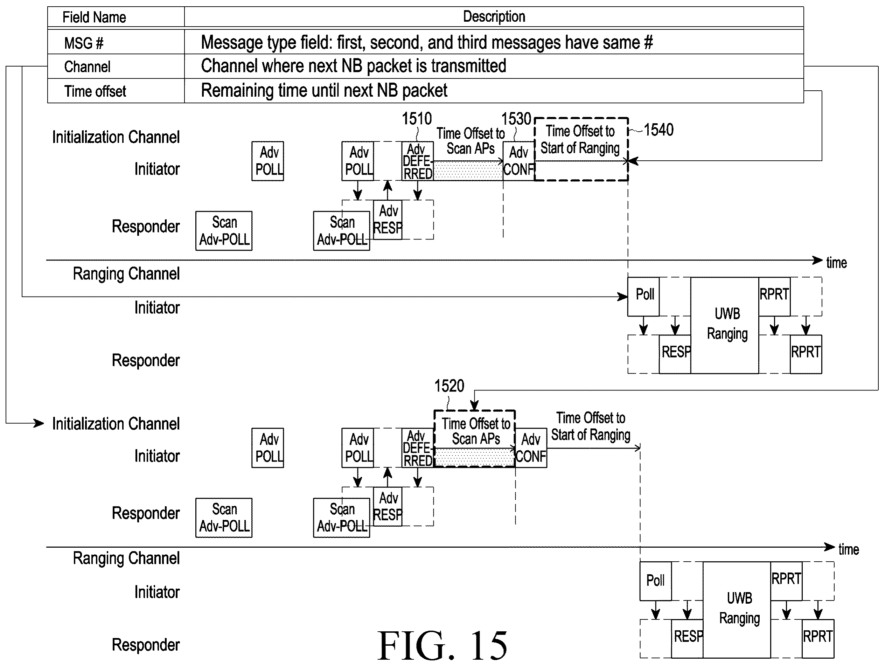

FIG. 15 illustrates another example of fields included in an Advertisement Deferred message or an Advertisement Confirmation message according to an embodiment of the disclosure.

The operations of the Initiator and the Responder illustrated in FIG. 15, except for operations 1510 to 1540, are the same or substantially the same as the corresponding operations of the Initiator and the Responder described above in FIG. 9, and thus detailed descriptions thereof are omitted.

Referring to FIGS. 9 and 15, in operation 1510, the Initiator may transmit an Advertisement Deferred message corresponding to the Advertisement Response message to the Responder within the initialization channel. According to an embodiment, the Advertisement Deferred message may be a connection identification message transmitted by the Controller and/or the Initiator in response to the Advertisement Response message.

According to an embodiment, the Advertisement Deferred message may include a field (MSG#) indicating the message type of the corresponding message, a channel information field (e.g., channel number) where the next NB packet is transmitted, and a time offset field indicating a remaining time until transmission or reception time of the next NB packet. For the field (MSG#) indicating the message type, the Advertisement Confirmation message and the Advertisement Deferred message may be set to the same value. According to an embodiment, the channel information field may indicate information (e.g., channel number) about a channel where the Advertisement Confirmation message transmitted by the Initiator is transmitted and/or information (e.g., channel number) about a channel where the poll message transmitted by the Initiator is transmitted. According to an embodiment, the time offset field may indicate a remaining time until transmission or reception time for the Advertisement Confirmation message transmitted by the Initiator and/or a remaining time until transmission or reception time for the poll message transmitted by the Initiator.

In operation 1520, the Initiator may set and/or apply a time offset for scanning at least one AP within the initialization channel.

According to an embodiment, the Initiator may optionally perform each of operation 1510 and operation 1520 (i.e., the Initiator may not transmit the Advertisement Deferred message). According to an embodiment, the Initiator may not perform operation 1510 and may transmit an Advertisement Confirmation message according to operation 1530 in response to the Advertisement Response message.

In operation 1530, the Initiator may transmit an Advertisement Confirmation message within the initialization channel. In operation 1540, the Initiator may set and/or apply a time offset for ranging initiation within the initialization channel.

According to an embodiment, the Advertisement Confirmation message may include a field (MSG#) indicating the message type of the corresponding message, a channel information field (e.g., channel number) where the next NB packet is transmitted, and a time offset field indicating a remaining time until transmission or reception time of the next NB packet. For the field (MSG#) indicating the message type, the Advertisement Confirmation message and the Advertisement Deferred message may be set to the same value. According to an embodiment, the channel information field may indicate information (e.g., channel number) about a channel where the poll message transmitted by the Initiator is transmitted. According to an embodiment, the time offset field may indicate a remaining time until transmission or reception time for the poll message transmitted by the Initiator.

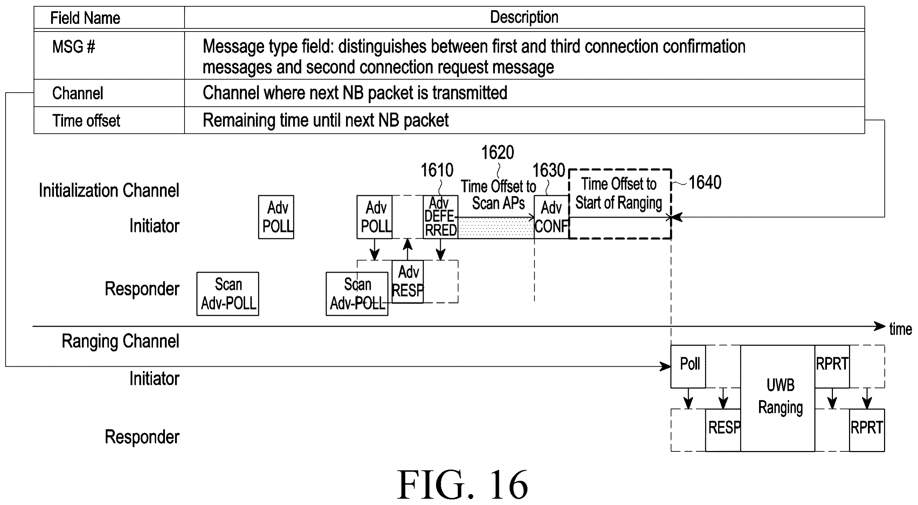

FIG. 16 illustrates an example of fields included in an Advertisement Confirmation message according to an embodiment of the disclosure.

The operations of the Initiator and the Responder illustrated in FIG. 16, except for operations 1610 to 1640, are the same or substantially the same as the corresponding operations of the Initiator and the Responder described above in FIG. 9, and thus detailed descriptions thereof are omitted.

Referring to FIGS. 9 and 16, in operation 1610, the Initiator may transmit an Advertisement Deferred message corresponding to the Advertisement Response message to the Responder within the initialization channel. In operation 1620, the Initiator may set and/or apply a time offset for scanning at least one AP within the initialization channel.

According to an embodiment, the Initiator may optionally perform each of operation 1610 and operation 1620 (i.e., the Initiator may not transmit the Advertisement Deferred message). According to an embodiment, the Initiator may not perform operation 1610 and may transmit an Advertisement Confirmation message according to operation 1630 in response to the Advertisement Response message.

In operation 1630, the Initiator may transmit an Advertisement Confirmation message within the initialization channel. In operation 1640, the Initiator may set and/or apply a time offset for ranging initiation within the initialization channel.

According to an embodiment, the Advertisement Confirmation message may include a field (MSG#) indicating the message type of the corresponding message, a channel information field (e.g., channel number) where the next NB packet is transmitted, and a time offset field indicating a remaining time until transmission or reception time of the next NB packet. According to an embodiment, different values may be set for each of the Advertisement Confirmation message and the Advertisement Deferred message for the field (MSG#) indicating the message type. According to an embodiment, the channel information field may indicate information (e.g., channel number) about a channel where the poll message transmitted by the Initiator is transmitted. According to an embodiment, the time offset field may indicate a remaining time until transmission or reception time for the poll message transmitted by the Initiator.

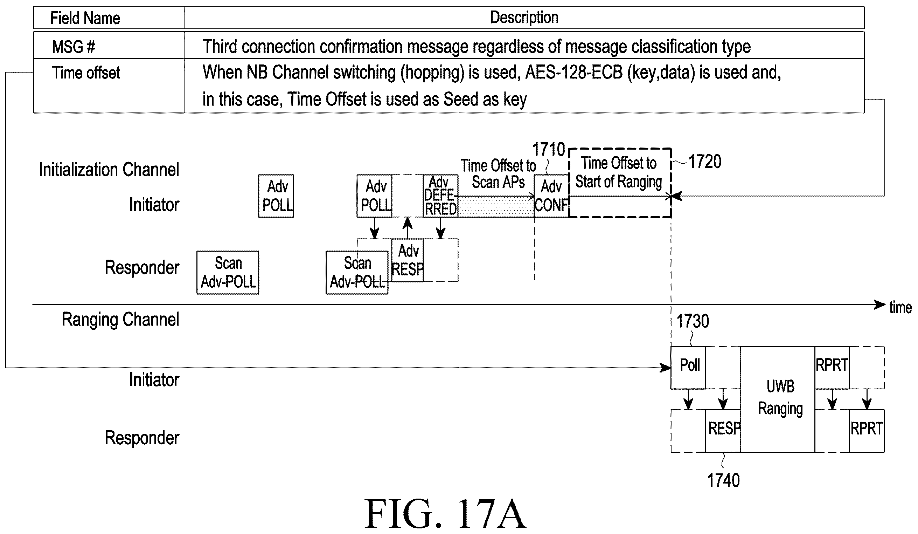

FIG. 17A illustrates another example of fields included in an Advertisement Confirmation message according to an embodiment of the disclosure.

A channel for a Poll message (or NB channel) may be changed during ranging. In the disclosure, an NB channel may be changed based on the NB channel switching method defined in IEEE 802.15.4ab.

A pseudo-random number generating function for NB channel change, NbaUwbPrngFunction=AES128(key, data) function may utilize a known counter mode. Here, key=NbaUwbPrngSeed and data=RangingBlockIndex may be set as inputs.

The following processes 1) and 2) are required for NB channel selection.
1) Utilizing Least Significant 32 bits of PrngValue: PrngValue = NbaUwbPrngFunction(NbaUwbPrngSeed, RangingBlockIndex) mod 2³²
2) SelectedChannel=NbaChannelAllowList[PrngValue mod NbaChannelAllowListLength]

Here, NBaChannelAllowList may be a Subset of all NB Channels selected by the Initiator based on information separately obtained for interference avoidance with IEEE 802.11 (Wi-Fi).

According to an embodiment, the Advertisement Confirmation message may include information about a key value (key=NbaUwbPrngSeed) that is an input of NbaUwbPrngFunction.

The operations of the Initiator and the Responder illustrated in FIG. 17A, except for operations 1710 to 1740, are the same or substantially the same as the corresponding operations of the Initiator and the Responder described above in FIG. 9, and thus detailed descriptions thereof are omitted.

Referring to FIGS. 9 and 17A, in operation 1710, the Initiator may transmit an Advertisement Confirmation message within the initialization channel. In operation 1720, the Initiator may set and/or apply a time offset for ranging initiation within the initialization channel.

According to an embodiment, the Advertisement Confirmation message may include a field (MSG#) indicating the message type of the corresponding message, and a time offset field indicating a remaining time until transmission or reception time of the next NB packet. According to an embodiment, the field (MSG#) indicating the message type may indicate the Advertisement Confirmation message regardless of the message classification type. According to an embodiment, the time offset field may indicate a remaining time until transmission or reception time for the poll message transmitted by the Initiator in operation 1730. According to an embodiment, when NB channel switching (or hopping) is used, AES-128-ECB(key, data) is used, and in this case, the time offset field may be used as a Seed as the key. According to an embodiment, the Advertisement Confirmation message may additionally include information corresponding to a key value (key=NbaUwbPrngSeed) that is an input of NbaUwbPrngFunction.

According to an embodiment, the Advertisement Confirmation message may further include a seed field. The seed field may include at least one of a time offset, a session ID, a random number, a key for generating an Advertisement Private Address, and a Key derived from a Seed Key such as a key for generating an Advertisement Private Address.

In operation 1730, the Initiator may transmit a poll message for ranging to the Responder within the ranging channel. In operation 1740, the Responder may transmit a Response message responding to the poll message to the Initiator within the ranging channel. According to an embodiment, the ranging channel where the poll message and the Response message are transmitted and received may be implemented within the NB channel.

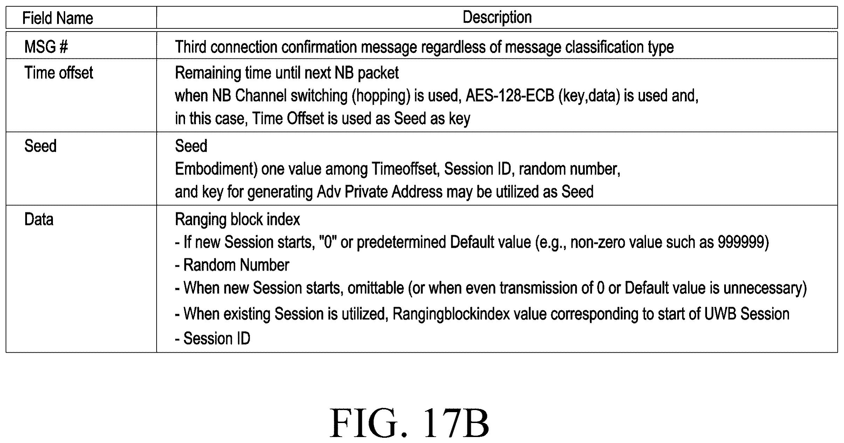

FIG. 17B illustrates yet another example of fields included in an Advertisement Confirmation message according to an embodiment of the disclosure.

Referring to FIG. 17B, the Advertisement Confirmation message may include information corresponding to a data value (data=RangingBlockIndex) that is an input of NbaUwbPrngFunction=AES128(key, data) function.

According to an embodiment, the Advertisement Confirmation message may include at least one of a field (MSG#) indicating the message type of the corresponding message, a time offset field indicating a remaining time until transmission or reception time of the next NB packet, a seed field, and a data field.

According to an embodiment, the seed field may be a key field for NB channel switching (i.e., key of NbaUwbPrngFunction=AES128(key, data) function). According to an embodiment, the data field may be a data field for NB channel switching (i.e., data of NbaUwbPrngFunction=AES128(key, data) function).

According to an embodiment, the field (MSG#) indicating the message type may indicate the Advertisement Confirmation message regardless of the message classification type. According to an embodiment, the time offset field may indicate a remaining time until transmission or reception time for the poll message transmitted by the Initiator in operation 1730. According to an embodiment, when NB channel switching (or hopping) is used, AES-128-ECB(key, data) is used, and in this case, the time offset field may be used as a Seed as the key.

According to an embodiment, the seed field may include at least one of a time offset, a session ID, a random number, and a key for generating an Advertisement Private Address.

According to an embodiment, the data field may indicate a ranging block index. According to an embodiment, when a session is newly started, the data field may be set to "0" or a predetermined default value (e.g., a non-zero value such as 999999). According to an embodiment, the data field may be set to a random number. According to an embodiment, when a session is newly started, the data field may be omittable (when even transmission of 0 or default value is unnecessary). According to an embodiment, when using an existing session, the data field may indicate a Rangingblockindex value corresponding to a UWB session start time. According to an embodiment, the data field may indicate a session ID.

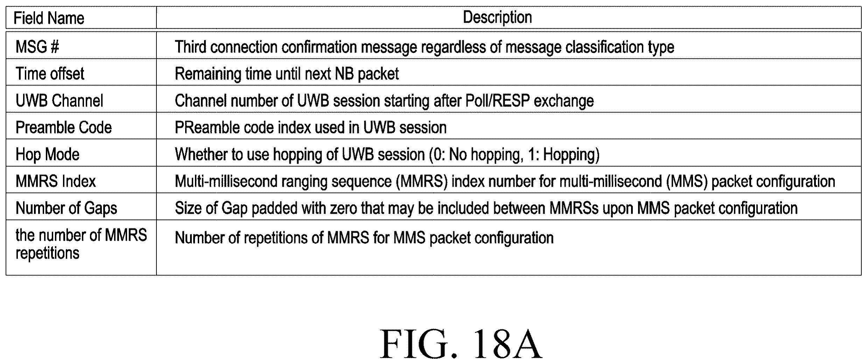

FIG. 18A illustrates yet another example of fields included in an Advertisement Confirmation message according to an embodiment of the disclosure.

Referring to FIG. 18A, the Advertisement Confirmation message may include configuration information for a UWB session to be started subsequently.

According to an embodiment, the Advertisement Confirmation message may include at least one of a field (MSG#) indicating the message type of the corresponding message, a time offset indicating a remaining time until transmission or reception time of the next NB packet, a UWB channel, a preamble code, a hop mode, a multi-millisecond ranging sequence (MMRS) index, a number of gaps, and a number of MMRS repetitions.

According to an embodiment, the field (MSG#) indicating the message type may indicate the Advertisement Confirmation message regardless of the message classification type. According to an embodiment, the time offset field may indicate a remaining time until transmission or reception time for the poll message transmitted by the Initiator in operation 1730. According to an embodiment, when NB channel sweeping (hopping) is used, AES-128-ECB(key, data) is used, and in this case, the time offset field may be used as a Seed as the key.

According to an embodiment, the UWB channel field may indicate a channel number of the UWB session started after the Poll message/Resp message exchange. According to an embodiment, the preamble code field may indicate a preamble code index used in the UWB session. According to an embodiment, the hop mode field may indicate whether hopping is used in the UWB session (e.g., 0: No hopping, 1: Hopping).

According to an embodiment, the multi-millisecond ranging sequence (MMRS) index field may indicate an MMRS index number for multi-millisecond (MMS) packet configuration. According to an embodiment, the number of gaps field may indicate a size of a Gap padded with zero that may be included between MMRSs when configuring an MMS packet. According to an embodiment, the number of MMRS repetitions field may indicate a number of MMRS repetitions for MMS packet configuration.

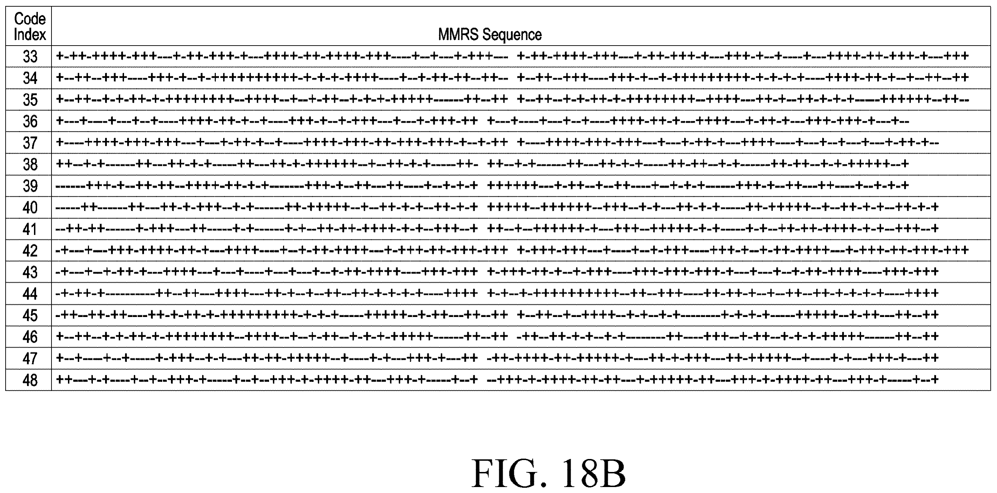

FIG. 18B illustrates an example of an MMRS index according to an embodiment of the disclosure.

According to an embodiment, an MMRS may be composed of 128 + or -. When the first 64 of the MMRS are called A and the last 64 of the MMRS are called B, an MMS packet may be composed of repetitions of [A (zero gap) B (zero gap)]. Here, the size of the zero gap is indicated by the number of gaps field of FIG. 18A, and the repetition of the MMS packet may be indicated by the number of MMRS repetitions field of FIG. 18A.

Referring to FIG. 18B, when the code index is 33 to 48, an MMRS may be configured for each. Here, the code index may be indicated by the multi-millisecond ranging sequence (MMRS) index field of FIG. 18A.

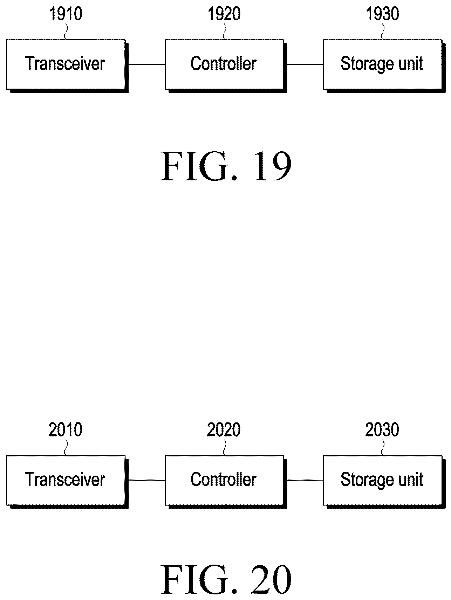

FIG. 19 illustrates a structure of a first UWB device according to an embodiment of the disclosure.

In the embodiment of FIG. 19, the first UWB device may correspond to the UWB device of FIG. 1, include a UWB device, or may be an electronic device that may include a portion of a UWB device.

In the embodiment of FIG. 19, the first UWB device may be a UWB device serving as an Initiator and/or Controller.

Referring to FIG. 19, the first UWB device may include a transceiver 1910, a controller 1920, and a storage unit 1930. In the disclosure, the controller may be defined as a circuit or an application-specific integrated circuit or at least one processor.

The transceiver 1910 may transmit and receive signals to/from another entity. The transceiver 1910 may transmit/receive data to/from another device through, e.g., at least one NB channel and/or at least one UWB channel.

In an embodiment, the transceiver 1910 may include at least one first transceiver supporting the NB channel and at least one second transceiver supporting the UWB channel. In another embodiment, the transceiver 1920 may include at least one transceiver supporting both the NB channel and the UWB channel.

The controller 1920 may control the overall operation of the electronic device according to an embodiment. For example, the controller 1920 may control signal flow between blocks to perform operations according to the flowchart described above. Specifically, the controller 1920 may control the operations of the first UWB device described above with reference to FIGS. 1 to 18B.

The storage unit 1930 may store at least one of information transmitted/received via the transceiver 1910 and information generated via the controller 1920. For example, the storage unit 1930 may store information and data necessary for the method described above with reference to FIGS. 1 to 18B.

According to an embodiment, the controller 1920 may broadcast a first message (Adv Poll) providing information used for discovery of the first UWB device (e.g., the device of FIG. 19) through an initialization channel. According to an embodiment, the controller 1920 may receive a second message (Adv RESP) responding to the first message (Adv Poll) from a second UWB device (e.g., the device of FIG. 20) through the initialization channel. According to an embodiment, the controller 1920 may transmit a third message (Adv DEFERRED or Adv CONF) corresponding to the second message (Adv RESP) to the second UWB device through the initialization channel. The initialization channel may include at least one of narrow band (NB) channels.

According to an embodiment, the controller 1920 may perform UWB ranging with the second UWB device based on the third message (Adv DEFERRED or Adv CONF) through a UWB channel. According to an embodiment, the controller 1920 may transmit channel occupancy information for at least one of the UWB channel and the NB channel to the second UWB device through at least one of the NB channels.

According to an embodiment, the NB channel may be a sub channel of an industrial, scientific and medical (ISM) band or an unlicensed national information infrastructure (U-NII) band. According to an embodiment, the NB channel may be a sub channel of one of candidate UWB channels allocated for UWB communication.

According to an embodiment, when the third message is an Adv CONF message, the third message may include a field (MSG#) indicating that the corresponding message is the Adv CONF message, a time offset field indicating a time until a start time of the next NB packet, and a channel field where the NB packet is transmitted.

According to an embodiment, when the third message is an Adv DEFERRED message, the third message may include a field (MSG#) indicating that the corresponding message is the Adv DEFERRED message and a time offset field indicating a time until transmitting or receiving an Adv CONF message.

According to an embodiment, when the third message is an Adv CONF message, the third message may include at least one of a field (MSG#) indicating that the corresponding message is the Adv CONF message, a time offset field indicating a remaining time until transmission or reception time of the next NB packet, a seed field, and a data field. The seed field may include at least one of a time offset, a session ID, a random number, and a key. The data field may indicate a ranging block index.

According to an embodiment, when the third message is an Adv CONF message, the third message may include at least one of a field (MSG#) indicating that the corresponding message is the Adv CONF message, a time offset indicating a remaining time until transmission or reception time of the next NB packet, a UWB channel, a preamble code, a hop mode, a multi-millisecond ranging sequence (MMRS) index, a number of gaps, and a number of MMRS repetitions.

According to an embodiment, the MMRS index may indicate an MMRS index number for multi-millisecond (MMS) packet configuration, the number of gaps may indicate a size of a gap padded with zero that may be included between MMRSs when configuring an MMS packet, and the number of MMRS repetitions may indicate a number of MMRS repetitions for the MMS packet configuration.

FIG. 20 illustrates a structure of a second UWB device according to an embodiment of the disclosure.

In the embodiment of FIG. 20, the first UWB device may correspond to the UWB device of FIG. 2, include a UWB device, or may be an electronic device that may include a portion of a UWB device.

In the embodiment of FIG. 20, the second UWB device may be a UWB device serving as a Responder and/or Controlee.

Referring to FIG. 20, the second UWB device may include a transceiver 2010, a controller 2020, and a storage unit 2030. In the disclosure, the controller may be defined as a circuit or an application-specific integrated circuit or at least one processor.

The transceiver 2010 may transmit and receive signals to/from another entity. The transceiver 2010 may transmit/receive data to/from another device through, e.g., at least one NB channel and/or at least one UWB channel.

In an embodiment, the transceiver 2010 may include at least one first transceiver supporting the NB channel and at least one second transceiver supporting the UWB channel. In another embodiment, the transceiver 2020 may include at least one transceiver supporting both the NB channel and the UWB channel.

The controller 2020 may control the overall operation of the electronic device according to an embodiment. For example, the controller 2020 may control signal flow between blocks to perform operations according to the flowchart described above. Specifically, the controller 2020 may control the operations of the second UWB device described above with reference to FIGS. 1 to 18B.

The storage unit 2030 may store at least one of information transmitted/received via the transceiver 2010 and information generated via the controller 2020. For example, the storage unit 2030 may store information and data necessary for the method described above with reference to FIGS. 1 to 18B.

According to an embodiment, the controller 2020 may receive a first message (Adv Poll) providing information used for discovery of a first UWB device (e.g., the device of FIG. 19) from the first UWB device through an initialization channel. According to an embodiment, the controller 2020 may transmit a second message (Adv RESP) responding to the first message (Adv Poll) to the first UWB device through the initialization channel. According to an embodiment, the controller 2020 may receive a third message (Adv DEFERRED or Adv CONF) corresponding to the second message (Adv RESP) from the first UWB device through the initialization channel. The initialization channel may include at least one of narrow band (NB) channels.

According to an embodiment, the controller 2020 may perform UWB ranging with the first UWB device based on the third message (Adv DEFERRED or Adv CONF) through a UWB channel.

According to an embodiment, the controller 2020 may receive channel occupancy information for at least one of the UWB channel and the NB channel from the first UWB device through at least one of the NB channels.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the disclosure have been described above, various changes may be made thereto without departing from the scope of the disclosure. Thus, the scope of the disclosure should not be limited to the above-described embodiments, and should rather be defined by the following claims and equivalents thereof.

## Claims

1. A method of a first ultra-wide band (UWB) device, comprising:
broadcasting a first message (Adv Poll) providing information used for discovery of the first UWB device through an initialization channel;
receiving a second message (Adv RESP) responding to the first message (Adv Poll) from a second UWB device through the initialization channel; and
transmitting a third message (Adv DEFERRED or Adv CONF) corresponding to the second message (Adv RESP) to the second UWB device through the initialization channel, wherein the initialization channel includes at least one of narrow band (NB) channels.

2. The method of claim 1, further comprising performing UWB ranging with the second UWB device based on the third message (Adv DEFERRED or Adv CONF) through a UWB channel.

3. The method of claim 1, further comprising transmitting channel occupancy information for at least one of a UWB channel and the NB channel to the second UWB device through at least one of the NB channels.

4. The method of claim 1, wherein the NB channel is a sub channel of an industrial, scientific and medical (ISM) band or an unlicensed national information infrastructure (U-NII) band, or wherein the NB channel is a sub channel of one of candidate UWB channels allocated for UWB communication.

5. The method of claim 1, wherein when the third message is an Adv CONF message, the third message includes a field (MSG#) indicating that the message is the Adv CONF message, and a channel field where the NB packet is transmitted.

6. The method of claim 1, wherein when the third message is an Adv DEFERRED message, the third message includes a field (MSG#) indicating that the message is the Adv DEFERRED message and a time offset field indicating a time until transmitting or receiving an Adv CONF message.

7. The method of claim 1, wherein when the third message is an Adv CONF message, the third message includes at least one of a field (MSG#) indicating that the message is the Adv CONF message, and a seed field, wherein the seed field includes a key.

8. The method of claim 1, wherein when the third message is an Adv CONF message, the third message includes at least one of a field (MSG#) indicating that the message is the Adv CONF message, a UWB channel, a multi-millisecond ranging sequence (MMRS) index, a number of gaps, and a number of MMRS repetitions.

9. The method of claim 8, wherein the MMRS index indicates an MMRS index number for multi-millisecond (MMS) packet configuration, wherein the number of gaps indicates a size of a gap padded with zero that may be included between MMRSs when configuring an MMS packet, and wherein the number of MMRS repetitions indicates a number of MMRS repetitions for the MMS packet configuration.

10. The method of claim 1, further comprising, when the third message is an Adv DEFERRED message, transmitting a fourth message (Adv CONF) to the second UWB device through the initialization channel.

11. A method of a second ultra-wide band (UWB) device, comprising:
receiving a first message (Adv Poll) providing information used for discovery of a first UWB device from the first UWB device through an initialization channel;
transmitting a second message (Adv RESP) responding to the first message (Adv Poll) to the first UWB device through the initialization channel; and
receiving a third message (Adv DEFERRED or Adv CONF) corresponding to the second message (Adv RESP) from the first UWB device through the initialization channel, wherein the initialization channel includes at least one of narrow band (NB) channels.

12. The method of claim 11, further comprising performing UWB ranging with the first UWB device based on the third message (Adv DEFERRED or Adv CONF) through a UWB channel.

13. The method of claim 11, further comprising receiving channel occupancy information for at least one of a UWB channel and the NB channel from the first UWB device through at least one of the NB channels.

14. A first ultra-wide band (UWB) device, comprising:
a transceiver; and
a controller, wherein the controller is configured to:
control to broadcast a first message (Adv Poll) providing information used for discovery of the first UWB device through an initialization channel;
receive a second message (Adv RESP) responding to the first message (Adv Poll) from a second UWB device through the initialization channel; and
control to transmit a third message (Adv DEFERRED or Adv CONF) corresponding to the second message (Adv RESP) to the second UWB device through the initialization channel, wherein the initialization channel includes at least one of narrow band (NB) channels.

15. A second ultra-wide band (UWB) device, comprising:
a transceiver; and
a controller, wherein the controller is configured to:
receive a first message (Adv Poll) providing information used for discovery of a first UWB device from the first UWB device through an initialization channel;
control to transmit a second message (Adv RESP) responding to the first message (Adv Poll) to the first UWB device through the initialization channel; and
receive a third message (Adv DEFERRED or Adv CONF) corresponding to the second message (Adv RESP) from the first UWB device through the initialization channel, wherein the initialization channel includes at least one of narrow band (NB) channels.
